# EUROPÄISCHE PATENTANMELDUNG

(11) **EP 4 523 893 A1**
(43) Veröffentlichungstag der Anmeldung: **19.03.2025**
(21) Anmeldenummer: 24197810.5
(22) Anmeldetag: 02.09.2024
(51) Int. Cl.: B29C 65/18, B29C 65/00, B29C 65/30, B65B 31/02, B65B 51/14

(54) **SIEGELEINRICHTUNG MIT ANGETRIEBENER HALTEEINRICHTUNG**

(30) Priorität: 15.09.2023 DE 102023124998
(71) Anmelder: MULTIVAC Sepp Haggenmüller SE & Co. KG, 87787 Wolfertschwenden (DE)
(72) Erfinder: Patz, Dominik, 87435 Kempten (DE); Stötzner, Alexander, 87437 Kempten (DE)
(74) Vertreter: Grünecker Patent- und Rechtsanwälte PartG mbB

(57) **Zusammenfassung**

Eine Siegeleinrichtung (1) für eine Verpackungsmaschine umfasst eine Siegelauflage (17), ein beheizbares Siegelwerkzeug (19), eine Halteeinrichtung (25), einen Halteantrieb (31) und einen Siegelantrieb (35). Der Halteantrieb (31) ist dazu konfiguriert, die Halteeinrichtung (25) relativ zu der Siegelauflage (17) zu bewegen, so dass eine Verschlussfolie (13) und ein Produktträger (7) zwischen der Halteeinrichtung (25) und der Siegelauflage (17) geklemmt werden. Der Siegelantrieb (35) ist dazu konfiguriert, das Siegelwerkzeug (19) relativ zu der Siegelauflage (17) zu bewegen und dadurch die Verschlussfolie (13) an den Produktträger (7) zu siegeln.

## Beschreibung

Die Erfindung betrifft das Gebiet der Produktverpackungen, insbesondere das Verschließen von Verpackungen durch Ansiegeln einer Verschlussfolie.

Aus der DE 10 2008 015 692 A1 ist eine Kammerbandmaschine zum Verpacken von Produkten in Beuteln bekannt. Es wird ein Deckel der Maschine abgesenkt, um eine luftdichte Kammer zu bilden. Auf einer Innenseite einer Deckfläche des Deckels ist ein Aufnahmeblock vorgesehen. Der Aufnahmeblock ist relativ zu dem Deckel absenkbar. An einer Unterseite des Aufnahmeblocks sind drei Federelemente vorgesehen. An zweien der Federelemente ist jeweils eine Klemmschienenaufnahme mit einer Klemmschiene vorgesehen. An dem anderen Federelement ist eine Siegelschienenaufnahme mit einer Siegelschiene vorgesehen. Wenn der Aufnahmeblock durch eine mechanische Vorrichtung relativ zum Deckel abgesenkt wird, wird ein zu verschließender Beutel gleichzeitig durch die beiden Klemmschienen fixiert und durch die Siegelschiene versiegelt.

Gemäß einem Aspekt der Erfindung wird eine Siegeleinrichtung für eine Verpackungsmaschine bereitgestellt. Die Siegeleinrichtung umfasst eine Siegelauflage, ein Siegelwerkzeug, eine Halteeinrichtung, einen Halteantrieb, und einen Siegelantrieb. Das Siegelwerkzeug ist beheizbar. Der Halteantrieb ist dazu konfiguriert, die Halteeinrichtung relativ zu der Siegelauflage zu bewegen, so dass eine Verschlussfolie und ein Produktträger zwischen der Halteeinrichtung und der Siegelauflage geklemmt werden. Der Siegelantrieb ist dazu konfiguriert, das Siegelwerkzeug relativ zu der Siegelauflage zu bewegen und dadurch die Verschlussfolie an den Produktträger zu siegeln.

Die Siegeleinrichtung kann dazu konfiguriert sein, die Verschlussfolie an den Produktträger zu siegeln und dadurch zumindest ein auf dem Produktträger liegendes Produkt zwischen dem Produktträger und der Verschlussfolie einzusiegeln. Nach dem Siegeln können der Produktträger und die Verschlussfolie zusammen eine verschlossene Verpackung bilden. Bei dem Siegeln können die Verschlussfolie und der Produktträger durch das Siegelwerkzeug unter Wärmeeinwirkung aneinandergepresst und dadurch miteinander verbunden werden. Der Siegelantrieb kann das beheizte Siegelwerkzeug zum Siegeln auf die Siegelauflage zubewegen, sodass die Verschlussfolie und der Produktträger zwischen dem beheizten Siegelwerkzeug und der Siegelauflage aneinandergepresst werden.

Durch Wärmeübertragung von dem beheizten Siegelwerkzeug kann die Verschlussfolie und/oder der Produktträger erwärmt werden. Durch das Erwärmen kann sich eine Verformbarkeit der Verschlussfolie und/oder des Produktträgers erhöhen. Durch das Klemmen der Verschlussfolie und des Produktträgers zwischen der Halteeinrichtung und der Siegelauflage können die Verschlussfolie und der Produktträger zumindest im Bereich der Halteeinrichtung festgehalten werden. Ein unerwünschtes Verformen der Verschlussfolie und/oder des Produktträgers kann hierdurch reduziert oder verhindert werden. Insbesondere kann durch ein Klemmen der Verschlussfolie und des Produktträgers durch die Halteeinrichtung ein unerwünschtes Verformen der Verschlussfolie und/oder des Produktträgers vor dem Siegeln, während des Siegelns und/oder nach dem Siegeln reduziert oder verhindert werden.

Wenn das warme Siegelwerkzeug den Produktträger erwärmt, kann eine Gewichtskraft zumindest eines auf dem Produktträger liegenden Produkts auf eine Dehnung des Produktträgers hinwirken. Eine Klemmung der Verschlussfolie und des Produktträgers zwischen der Halteeinrichtung und der Siegelaufnahme kann einer solchen Dehnung entgegenwirken oder eine solche Dehnung zumindest teilweise verhindern.

Bei dem Siegeln kann das warme Siegelwerkzeug mit der Verschlussfolie in Kontakt sein. Nach dem Siegeln kann eine gewisse Anhaftung der Verschlussfolie und/oder des Produktträgers an dem warmen Siegelwerkzeug bestehen. Die Klemmung der Verschlussfolie und des Produktträgers zwischen der Halteeinrichtung und der Siegelauflage kann ein zerstörungsfreies Lösen des Siegelwerkzeugs von der Verschlussfolie und/oder dem Produktträger nach dem Siegeln begünstigen, insbesondere ohne ein Aufreißen oder Beschädigen der frischen Siegelnaht.

Die Klemmung der Verschlussfolie und des Produktträgers zwischen der Halteeinrichtung und der Siegelauflage kann noch bestehen bleiben, nachdem das Siegelwerkzeug durch den Siegelantrieb nach dem Siegeln wieder außer Kontakt mit der Verschlussfolie bewegt wurde. Durch ein Aufrechterhalten der Klemmung können die Verschlussfolie und der Produktträger an Ort und Stelle gehalten und/oder stabilisiert werden, bis die Siegelnaht zumindest ausreichend abgekühlt ist.

Da für das Siegelwerkzeug und die Halteeinrichtung jeweils ein eigener Antrieb vorgesehen ist, nämlich der Siegelantrieb und der Halteantrieb, können das Siegelwerkzeug und die Halteeinrichtung getrennt voneinander oder unabhängig voneinander bewegt werden. Insbesondere können die Verschlussfolie und der Produktträger durch Bewegen der Halteeinrichtung durch den Halteantrieb unabhängig von einer Bewegung des Siegelwerkzeugs geklemmt werden.

Die Siegelauflage kann unter dem Siegelwerkzeug und unter der Halteeinrichtung vorgesehen sein. Die Siegelauflage kann eine Auflagefläche für den Produktträger bilden. Die Verschlussfolie kann oberhalb des Produktträgers auf der Siegelauflage liegen.

Der Halteantrieb kann dazu konfiguriert sein, eine Position der Halteeinrichtung relativ zu der Siegelauflage durch Bewegen der Halteeinrichtung zu verändern. Vorzugsweise verändert der Halteantrieb nicht die Position der Siegelauflage. Vorzugsweise verändert der Halteantrieb nicht die Position des Siegelwerkzeugs. Der Halteantrieb kann dazu konfiguriert sein, die Halteeinrichtung auf die Siegelauflage zu abzusenken und dadurch die Verschlussfolie und den Produktträger zwischen der Halteeinrichtung und der Siegelauflage zu klemmen. Der Halteantrieb kann dazu konfiguriert sein, die Halteeinrichtung von der Siegelauflage weg anzuheben und dadurch die Klemmung der Verschlussfolie und des Produktträgers zwischen der Halteeinrichtung und der Siegelauflage aufzuheben. Der Halteantrieb kann dazu konfiguriert sein, die Halteeinrichtung relativ zu dem Siegelwerkzeug zu bewegen.

Der Siegelantrieb kann dazu konfiguriert sein, eine Position des Siegelwerkzeugs relativ zu der Siegelauflage durch Bewegen des Siegelwerkzeugs zu verändern. Vorzugsweise verändert der Siegelantrieb nicht die Position der Siegelauflage. Vorzugsweise verändert der Siegelantrieb nicht die Position der Halteeinrichtung. Der Siegelantrieb kann dazu konfiguriert sein, das Siegelwerkzeug in Richtung der Siegelauflage abzusenken und dadurch die Verschlussfolie an den Produktträger zu siegeln. Der Siegelantrieb kann dazu konfiguriert sein, das Siegelwerkzeug von der Siegelauflage weg anzuheben und dadurch das Siegelwerkzeug von der Verschlussfolie und dem Produktträger zu beabstanden. Der Siegelantrieb kann dazu konfiguriert sein, das Siegelwerkzeug relativ zu der Halteeinrichtung zu bewegen.

Der Halteantrieb kann dazu konfiguriert sein, die Halteeinrichtung relativ zu der Siegelauflage zu bewegen, während das Siegelwerkzeug relativ zu der Siegelaufnahme stationär bleibt.

Der Siegelantrieb kann dazu konfiguriert sein, das Siegelwerkzeug relativ zu der Siegelauflage zu bewegen, während die Halteeinrichtung relativ zu der Siegelauflage stationär bleibt.

Der Halteantrieb kann dazu konfiguriert sein, die Halteeinrichtung auf die Siegelauflage zuzubewegen, so dass die Verschlussfolie und der Produktträger zwischen der Halteeinrichtung und der Siegelaufnahme geklemmt werden, während das Siegelwerkzeug von der Verschlussfolie und dem Produktträger beabstandet ist. Der Halteantrieb kann dazu konfiguriert sein, die Halteeinrichtung vor dem Siegeln auf die Siegelauflage zuzubewegen, sodass die Verschlussfolie und der Produktträger zwischen der Halteeinrichtung und der Siegelauflage geklemmt werden. Der Halteantrieb kann dazu konfiguriert sein, die Verschlussfolie und den Produktträger zwischen der Halteeinrichtung und der Siegelauflage einzuklemmen, bevor das Siegelwerkzeug durch den Siegelantrieb mit der Verschlussfolie in Kontakt gebracht wurde, insbesondere bevor das Siegelwerkzeug durch den Siegelantrieb auf die Siegelauflage zubewegt wird.

Der Siegelantrieb kann dazu konfiguriert sein, das Siegelwerkzeug auf die Siegelauflage zuzubewegen und dadurch die Verschlussfolie an dem Produktträger zu siegeln, während der Produktträger und die Verschlussfolie zwischen der Halteeinrichtung und der Siegelauflage geklemmt sind.

Der Halteantrieb kann dazu konfiguriert sein, eine Klemmung der Verschlussfolie und des Produktträgers zwischen der Halteeinrichtung und der Siegelauflage erst zu lösen, nachdem das Siegelwerkzeug durch den Siegelantrieb zumindest so weit von der Siegelauflage wegbewegt wurde, dass das Siegelwerkzeug von der Verschlussfolie und dem Produktträger beabstandet ist. Der Halteantrieb kann dazu konfiguriert sein, die Klemmung der Verschlussfolie und des Produktträgers zwischen der Halteeinrichtung und der Siegelauflage erst nach Ablauf einer Wartezeit zu lösen, wobei die Wartezeit beginnt, wenn das Siegelwerkzeug nach dem Siegeln vollständig außer Kontakt mit der Verschlussfolie gebracht wurde. Die Wartezeit kann beispielsweise zumindest 1 Sekunde, oder zumindest 2 Sekunden, oder zumindest 3 Sekunden, oder zumindest 5 Sekunden, oder zumindest 10 Sekunden umfassen. Während der Wartezeit kann die frische Siegelnaht zumindest teilweise abkühlen und somit an Stabilität gewinnen. Wenn nach Ablauf der Wartezeit die Klemmung gelöst wird, ist die Siegelnaht vorzugsweise bereits stabil genug, um durch auftretende Spannungen nicht beschädigt zu werden.

Die Siegeleinrichtung kann dazu ausgebildet sein, einen Arbeitstakt durchzuführen, insbesondere hintereinander mehrere gleichartige Arbeitstakte auszuführen. In einer Ausgangsstellung des Arbeitstaktes können der Produktträger und die Verschlussfolie übereinander zwischen der Siegelauflage auf der einen Seite und der Halteeinrichtung und dem beheizten Siegelwerkzeug auf der anderen Seite positioniert sein. Aus der Ausgangsstellung heraus kann zunächst die Halteeinrichtung in Richtung auf die Siegelauflage zu abgesenkt werden, sodass die Verschlussfolie und der Produktträger zwischen der Halteeinrichtung und der Siegelauflage geklemmt werden. Während die Klemmung aufrechterhalten bleibt, kann anschließend das warme Siegelwerkzeug in Richtung auf die Siegelauflage abgesenkt werden, mit der Verschlussfolie in Kontakt kommen und die Verschlussfolie und den Produktträger aneinander siegeln. Bei weiter aufrechterhaltener Klemmung kann das Siegelwerkzeug nach erfolgter Siegelung wieder angehoben werden und so außer Kontakt mit der Verschlussfolie gebracht werden. Nach Ablauf einer Wartezeit nachdem der Kontakt zwischen dem Siegelwerkzeug und der Verschlussfolie aufgehoben wurde kann auch die Halteeinrichtung wieder angehoben und so außer Kontakt mit der Verschlussfolie gebracht werden.

Die Halteeinrichtung kann zwischen dem Siegelwerkzeug und der Siegelauflage angeordnet sein.

Das Siegelwerkzeug kann dazu konfiguriert sein, die Verschlussfolie und den Produktträger entlang einer Siegelnaht aneinander zu siegeln. Die Siegelnaht kann eine geschlossen umlaufende Siegelnaht sein. Die Siegelnaht kann vollständig um ein zwischen dem Produktträger und der Verschlussfolie liegendes Produkt herum umlaufen. Durch ein Verbinden von Verschlussfolie und Produktträger entlang einer vollständig umlaufenden Siegelnaht kann eine geschlossene, insbesondere luftdicht geschlossene, Verpackung hergestellt werden.

Das Siegelwerkzeug kann eine Siegelkante umfassen. Die Siegelkante kann dazu konfiguriert sein, entlang der zu erstellenden Siegelnaht mit der Verschlussfolie in Kontakt zu kommen. Die Siegelkante kann eine geschlossen umlaufende Siegelkante sein. Die Siegelkante kann gegenüber einem Körper des Siegelwerkzeugs in Richtung auf die Siegelauflage vorstehen. Die Siegelkante kann beheizbar sein, insbesondere direkt beheizbar oder durch Beheizen des Körpers des Siegelwerkzeugs beheizbar.

Die Halteeinrichtung kann dazu konfiguriert sein, die Verschlussfolie und den Produktträger entlang eines Klemmpfads zwischen der Halteeinrichtung und der Siegelauflage zu klemmen. Der Klemmpfad kann um ein zwischen dem Produktträger und der Verschlussfolie liegendes Produkt herum umlaufen. Der Klemmpfad kann ein geschlossen umlaufender Klemmpfad sein oder ein mit Unterbrechungen umlaufender Klemmpfad. Unterbrechungen in dem Klemmpfad können beispielweise jeweils maximal einen Winkelbereich von 90 Grad, oder maximal von 60 Grad, oder maximal von 45 Grad, oder maximal von 30 Grad, oder maximal von 20 Grad, oder maximal von 10 Grad, oder maximal von 5 Grad bezüglich einer Umlaufrichtung des Klemmpfads überdecken. Wenn auf unterschiedlichen Seiten eines zwischen dem Produktträger und der Verschlussfolie liegenden Produkts eine Klemmung besteht, kann unerwünschten Verformungen der Verschlussfolie und/oder des Produktträgers besonders wirksam entgegengewirkt werden.

Vorzugsweise liegt der Klemmpfad innerhalb der Siegelnaht, wird also von der Siegelnaht umschlossen. Durch eine Klemmung innerhalb der Siegelnaht kann die Siegelnaht besonders gut von Kräften entlastet werden, die innerhalb der Siegelnaht auf die Verschlussfolie und/oder den Produktträger wirken. Zum Beispiel kann die Siegelnaht wirksam gegenüber einer Gewichtskraft zumindest eines auf dem Produktträger liegenden Produkts entlastet werden. Zum Beispiel kann die Siegelnaht wirksam bezüglich Kräften entlastet werden, welche durch ein Nach-Oben-Saugen der Verschlussfolie verursacht werden, wenn oberhalb der Verschlussfolie ein Unterdruck angelegt wird.

Die Halteeinrichtung kann eine umlaufende Haltekante aufweisen. Die Haltekante kann dazu konfiguriert sein, den Produktträger und die Verschlussfolie um ein zwischen dem Produktträger und der Verschlussfolie liegendes Produkt herum umlaufend zwischen der Halteeinrichtung und der Siegelauflage zu klemmen, insbesondere entlang des Klemmpfads.

Die Haltekante kann geschlossen oder mit Unterbrechung umlaufen. Unterbrechungen in der Haltekante können beispielweise jeweils maximal einen Winkelbereich von 90 Grad, oder maximal von 60 Grad, oder maximal von 45 Grad, oder maximal von 30 Grad, oder maximal von 20 Grad, oder maximal von 10 Grad, oder maximal von 5 Grad bezüglich einer Umlaufrichtung der Haltekante überdecken.

Die Haltekante kann innerhalb der Siegelkante liegen. Die Siegelkante kann außerhalb der Haltekante liegen. Die Siegelkante kann die Haltekante vollständig umschließen.

Die Halteeinrichtung kann einen Abdeckungsbereich aufweisen. Der Abdeckungsbereich kann einen von der Haltekante umlaufenen Bereich in Richtung auf das Siegelwerkzeug hin, insbesondere nach oben hin, vollständig abdecken. Der Abdeckungsbereich kann domförmig ausgebildet sein. Der Abdeckungsbereich kann einen unerwünschten Kontakt zwischen der Verschlussfolie und dem Siegelwerkzeug, insbesondere dem Körper des Siegelwerkzeugs, innerhalb eines von der Haltekante umschlossenen Bereichs verhindern. Der Abdeckungsbereich kann eine Wärmeübertragung von dem Siegelwerkzeug auf die Verschlussfolie, das Produkt und/oder den Produktträger in einem von der Haltekante umschlossenen Bereich reduzieren oder unterbinden. Insbesondere wenn Lebensmittelprodukte verpackt werden, könnte eine ungewollte Produkterwärmung die Produktqualität und/oder die Haltbarkeit beeinträchtigen.

Die Siegeleinrichtung kann eine Siegelwerkzeug-Heizeinrichtung zum Beheizen des Siegelwerkzeugs umfassen. Die Siegelwerkzeug-Heizeinrichtung kann in das Siegelwerkzeug integriert sein. Die Siegelwerkzeug-Heizeinrichtung kann beispielweise als elektrische Heizeinrichtung ausgebildet sein. Die Siegelwerkzeug-Heizeinrichtung kann beispielweise zumindest ein elektrisches Widerstandsheizelement umfassen. Das zumindest eine elektrische Widerstandsheizelement kann in das Siegelwerkzeug integriert sein, insbesondere in den Körper des Siegelwerkzeugs und/oder in die Siegelkante. Die Siegelwerkzeug-Heizeinrichtung kann dazu konfiguriert sein, die Siegelkante auf eine Arbeitstemperatur zu heizen. Die Siegelwerkzeug-Heizeinrichtung kann dazu konfiguriert sein, eine Temperatur des Siegelwerkzeugs, insbesondere eine Temperatur der Siegelkante, auf eine Siegelwerkzeug-Solltemperatur zu regeln. Die Siegelwerkzeug-Solltemperatur kann beispielweise zwischen 100 Grad Celsius und 160 Grad Celsius, oder zwischen 110 Grad Celsius und 160 Grad Celsius, oder zwischen 120 Grad Celsius und 140 Grad Celsius liegen.

Das Siegelwerkzeug, insbesondere die Siegelkante, kann ein Metall umfassen oder aus Metall bestehen. Ein Siegelwerkzeug oder eine Siegelkante aus Metall kann gut zur Wärmeübertragung geeignet sein. Das Siegelwerkzeug, insbesondere die Siegelkante, kann eine Anti-Haft-Beschichtung aufweisen, um einem Ankleben der Verschlussfolie entgegenzuwirken.

Die Verschlussfolie und/oder der Produktträger kann aus einem thermoplastischen Material bestehen oder ein thermoplastisches Material umfassen. Der Produktträger kann aus einem Folienmaterial bestehen. Die Verschlussfolie und/oder der Produktträger kann aus einem Kunststoffmaterial bestehen oder ein Kunststoffmaterial umfassen. Der Produktträger kann aus einem faserbasierten Material bestehen oder faserbasiertes Material umfassen. Die Verschlussfolie und der Produktträger können dazu konfiguriert sein, durch Wärme- und Druckeinwirkung aneinander gesiegelt zu werden.

Die Verschlussfolie kann als Folienbahn ausgebildet sein. Der Produktträger als eine Folienbahn mit darin durch Tiefziehen ausgebildeten Verpackungsmulden ausgebildet sein. Der Produktträger kann als Verpackungsschale ausgebildet sein.

Die Halteeinrichtung, insbesondere die Haltekante, kann unbeheizt ausgebildet sein. In der Praxis kann es dennoch in einem gewissen Maße zu einer Wärmeübertragung von dem Siegelwerkzeug auf die Halteeinrichtung kommen. Eine aktive Beheizung der Halteeinrichtung ist vorzugsweise aber nicht vorgesehen. Die Halteeinrichtung, insbesondere die Haltekante, kann dazu konfiguriert sein, im Betrieb eine Temperatur aufzuweisen, welche um zumindest 20 Grad Celsius, oder um zumindest 30 Grad Celsius, oder um zumindest 40 Grad Celsius, oder um zumindest 50 Grad Celsius, oder um zumindest 60 Grad Celsius, oder um zumindest 70 Grad Celsius, oder um zumindest 80 Grad Celsius, oder um zumindest 90 Grad Celsius, oder um zumindest 100 Grad Celsius, oder um zumindest 110 Grad Celsius unter der Siegelwerkzeug-Solltemperatur liegt.

Die Halteeinrichtung, insbesondere die Haltekante, kann ein nichtmetallisches Material umfassen oder aus einem nichtmetallischen Material bestehen. Die Halteeinrichtung, insbesondere die Haltekante, kann ein Kunststoffmaterial umfassen, oder aus einem Kunststoffmaterial bestehen. Die Halteeinrichtung, insbesondere die Haltekante, kann ein metallisches Material umfassen oder aus einem metallischen Material bestehen. Das metallische Material kann beispielsweise Aluminium umfassen oder aus Aluminium bestehen.

Die Siegeleinrichtung kann eine Kühleinrichtung umfassen. Die Kühleinrichtung kann dazu konfiguriert sein, die Halteeinrichtung aktiv zu kühlen. Die Kühleinrichtung kann zumindest teilweise in die Halteeinrichtung integriert sein. Die Kühleinrichtung kann beispielweise einen oder mehrere in der Halteeinrichtung ausgebildete Kühlkanäle umfassen. Die Kühleinrichtung kann ein Kühlaggregat umfassen. Das Kühlaggregat kann dazu konfiguriert sein, ein Kühlmedium, beispielsweise eine Kühlflüssigkeit, welche in den Kühlkanälen fließt, zu kühlen. Die Kühleinrichtung kann dazu konfiguriert sein, die Halteeinrichtung, insbesondere die Haltekante, auf eine Halteeinrichtungs-Solltemperatur zu kühlen. Die Halteeinrichtungs-Solltemperatur kann beispielsweise in einem Bereich von 0 Grad Celsius bis 20 Grad Celsius, oder in einem Bereich von 0 Grad Celsius bis 15 Grad Celsius, oder in einem Bereich von 0 Grad Celsius bis 10 Grad Celsius, oder in einem Bereich von 0 Grad Celsius bis 5 Grad Celsius liegen. Durch eine vergleichsweise kalte Halteeinrichtung, insbesondere eine vergleichsweise kalte Haltekante, kann eine Verformung der Verschlussfolie und/oder eine Verformung des Produktträgers im Bereich der Haltekante reduziert oder vermieden werden.

Die Siegeleinrichtung kann als Siegelstation ausgebildet sein.

Die Siegeleinrichtung kann ein Werkzeugoberteil und ein Werkzeugunterteil umfassen. Das Werkzeugoberteil kann das Siegelwerkzeug und die Halteeinrichtung umfassen. Das Werkzeugunterteil kann die Siegelauflage umfassen.

Das Werkzeugoberteil und das Werkzeugunterteil können relativ zueinander zwischen einer geschlossenen Stellung und einer geöffneten Stellung bewegt werden, insbesondere durch Anheben oder Absenken des Werkzeugunterteils.

In der geschlossenen Stellung können das Werkzeugoberteil und das Werkzeugunterteil eine Siegelkammer bilden und nach außen hin luftdicht abschließen. Die Siegelauflage, das Siegelwerkzeug und die Halteeinrichtung können jeweils zumindest teilweise in der Siegelkammer angeordnet sein. In der geschlossenen Stellung können die Verschlussfolie und der Produktträger zwischen dem Werkzeugoberteil und dem Werkzeugunterteil geklemmt sein und zumindest teilweise in der Siegelkammer vorliegen.

In der geöffneten Stellung können das Werkzeugoberteil und das Werkzeugunterteil voneinander beabstandet sein, so dass die Verschlussfolie und der Produktträger weitertransportiert werden können.

Nachdem die Klemmung der Verschlussfolie und des Produktträgers zwischen der Halteeinrichtung und der Siegelauflage hergestellt wurde, aber vor dem Absenken des Siegelwerkzeugs, kann die Siegelkammer optional evakuiert werden, also Unterdruck in der Siegelkammer erzeugt werden. Anschließend kann die Siegelnaht durch Absenken des Siegelwerkzeugs erstellt werden. Nach dem Erstellen der Siegelnaht kann die Siegelkammer wieder belüftet werden.

Gemäß einem weiteren Aspekt der Erfindung wird ein Verfahren zum Verschließen von Verpackungen bereitgestellt. Ein Produktträger und eine Verschlussfolie werden durch Absenken einer Halteeinrichtung mittels eines Halteantriebs zwischen der Halteeinrichtung und einer Siegelauflage um ein zwischen dem Produktträger und der Verschlussfolie liegendes Produkt herum geklemmt. Bei bestehender Klemmung des Produktträgers und der Verschlussfolie zwischen der Halteeinrichtung und der Siegelauflage wird ein beheiztes Siegelwerkzeug mittels eines Siegelantriebs abgesenkt, so dass die Verschlussfolie entlang einer sich vollständig um das zwischen dem Produktträger und der Verschlussfolie liegende Produkt herum erstreckenden Siegelnaht an den Produktträger gesiegelt wird. Nach dem Siegeln wird bei immer noch bestehender Klemmung des Produktträgers und der Verschlussfolie zwischen der Halteeinrichtung und der Siegelauflage das Siegelwerkzeug durch den Siegelantrieb angehoben.

Das Verfahren kann zudem das Evakuieren einer Siegelkammer umfassen. Das Siegelwerkzeug, die Siegelauflage und die Halteeinrichtung können sich in der Siegelkammer befinden. Das Evakuieren der Siegelkammer kann bei bestehender Klemmung des Produktträgers und der Verschlussfolie zwischen der Halteeinrichtung und der Siegelauflage erfolgen.

Das Klemmen des Produktträgers und der Verschlussfolie zwischen der Halteeinrichtung und der Siegelauflage kann entlang eines Klemmpfads erfolgen. Der Klemmpfad kann durch einen Verlauf einer Haltekante der Halteeinrichtung definiert sein. Der Klemmpfad kann innerhalb der Siegelnaht liegen. Die Siegelnaht kann den Klemmpfad umschließen. Die Siegelnaht kann um den Klemmpfad umlaufen.

Innerhalb der Siegelnaht, insbesondere innerhalb der Haltekante, kann ein Kontakt zwischen der Verschlussfolie und dem Siegelwerkzeug durch einen Abdeckungsbereich der Halteeinrichtung verhindert werden. Der Abdeckungsbereich kann zwischen der Verschlussfolie und dem Siegelwerkzeug vorliegen.

Die Halteeinrichtung, insbesondere die Haltekante, kann zumindest um 20 Grad Celsius, oder zumindest um 30 Grad Celsius, oder zumindest um 40 Grad Celsius, oder zumindest um 50 Grad Celsius, oder zumindest um 60 Grad Celsius kälter als das Siegelwerkzeug, insbesondere als eine Siegelkante des Siegelwerkzeugs, sein.

Das Siegelwerkzeug kann durch eine Siegelwerkzeug-Heizeinrichtung aktiv beheizt werden.

Die Halteeinrichtung, insbesondere die Haltekante der Halteeinrichtung, kann unbeheizt sein. Die Halteeinrichtung, insbesondere die Haltekante der Halteeinrichtung, kann durch eine Kühleinrichtung aktiv gekühlt werden.

Es werden eine Siegeleinrichtung für eine Verpackungsmaschine und ein Verfahren zum Verschließen von Verpackungen beschrieben. Merkmale, Beschreibungen und Erläuterungen, welche in Bezug auf einen dieser Aspekte beschrieben werden, lassen sich auch auf den anderen Aspekt übertragen oder mit diesem kombinieren. Die Siegeleinrichtung kann zum Durchführen des Verfahrens geeignet, ausgelegt und/oder konfiguriert sein. Das Verfahren kann anhand der Siegeleinrichtung durchführbar sein oder anhand der Siegeleinrichtung durchgeführt werden.

Im Folgenden wird die Erfindung anhand eines Ausführungsbeispiels unter Bezugnahme auf die Figuren weiter erläutert.
Figur 1 zeigt eine Siegeleinrichtung gemäß einer Ausführungsform in einer ersten Schnittansicht, wobei sowohl das Siegelwerkzeug als auch die Halteeinrichtung in einer angehobenen Position sind.
Figur 2 zeigt die Siegeleinrichtung in der ersten Schnittansicht, wobei das Siegelwerkzeug in der angehobenen Position und die Halteeinrichtung in einer abgesenkten Position ist.
Figur 3 zeigt die Siegeleinrichtung in einer zweiten Schnittansicht, wobei sowohl das Siegelwerkzeug als auch die Halteeinrichtung in einer abgesenkten Position sind.
Figur 4 zeigt die Siegeleinrichtung in der zweiten Schnittansicht, wobei das Siegelwerkzeug in der angehobenen Position und die Halteeinrichtung in der abgesenkten Position ist.
Figur 5 zeigt eine schematische Darstellung der Siegelnaht und des Klemmpfads anhand dreier nebeneinanderliegender Verpackungen.

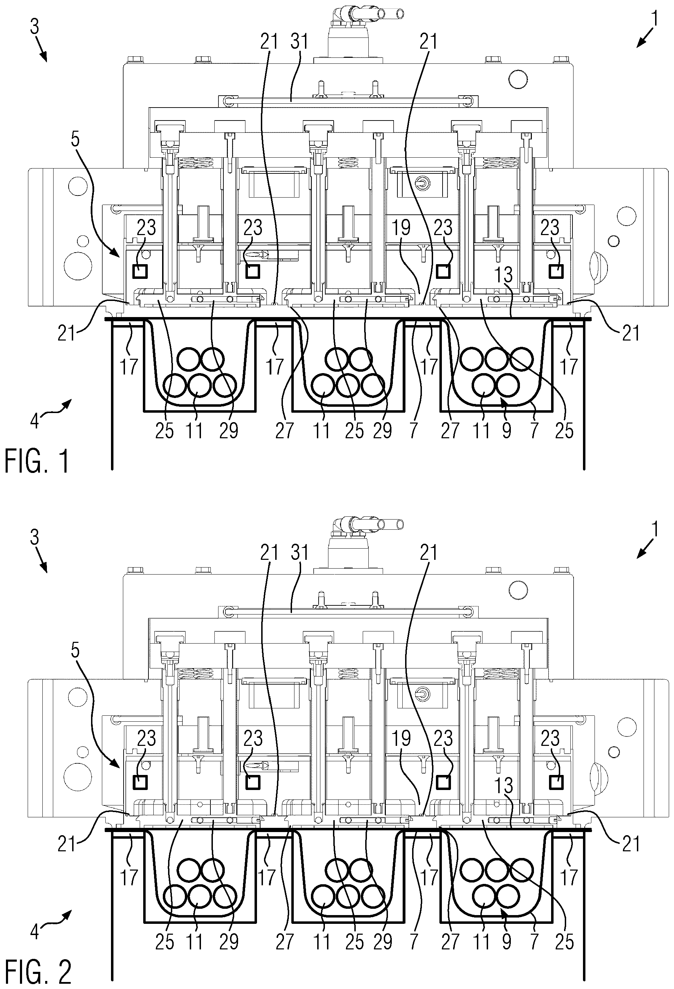

Die Figuren 1 bis 4 zeigen eine als Siegelstation für eine Verpackungsmaschine ausgebildete Siegeleinrichtung 1 gemäß einer Ausführungsform. Die Siegeleinrichtung 1 umfasst ein Oberwerkzeug 3 und ein unter diesem angeordnetes Unterwerkzeug 4. Das Unterwerkzeug 4 ist hubbar ausgebildet. In den Figuren ist das Unterwerkzeug 4 in einer vollständig angehobenen Stellung dargestellt, in welcher das Unterwerkzeug 4 und das Oberwerkzeug 3 zusammen eine abgeschlossene Siegelkammer 5 bilden.

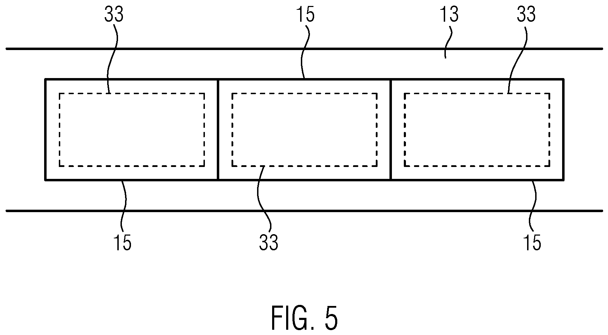

Zwischen dem Unterwerkzeug 4 und dem Oberwerkzeug 3 ist ein Produktträger 7 angeordnet. Der Produktträger 7 ist in der dargestellten Ausführungsform eine Folienbahn mit darin durch Tiefziehen ausgebildeten Verpackungsmulden 9. In den Verpackungsmulden 9 sind zu verpackende Produkte 11 angeordnet. Zwischen dem Werkzeugunterteil 4 und dem Werkzeugoberteil 3 ist über dem Produktträger 7 eine Verschlussfolie 13 angeordnet. In der Siegeleinrichtung 1 soll die Verschlussfolie 13 jeweils entlang einer eine Verpackungsmulde 9 umlaufenden Siegelnaht 15 (siehe Figur 5) an den Produktträger 7 gesiegelt werden, um verschlossene Verpackungen herzustellen. In der dargestellten Ausführungsform werden in der Siegeleinrichtung 1 mehrere Verpackungen gleichzeitig verschlossen. Es könnte aber auch immer nur eine Verpackung gleichzeitig verschlossen werden.

Das Unterwerkzeug 4 umfasst eine Siegelauflage 17, auf welcher der Produktträger 7 und darüber die Verschlussfolie 13 liegen.

Das Oberwerkzeug 3 umfasst ein Siegelwerkzeug 19. Das Siegelwerkzeug 19 umfasst einen plattenförmigen Körper, von dem eine Siegelkante 21 nach unten vorsteht.

Das Siegelwerkzeug 19 umfasst eine Heizeinrichtung 23 mit mehreren in den Körper des Siegelwerkzeugs 19 integrierten Heizelementen. Die Heizelemente sind vorzugsweise als elektrische Widerstands-Heizelemente ausgebildet. Die Heizeinrichtung 23 ist dazu ausgelegt, die Siegelkante 21 auf eine Siegelwerkzeug-Solltemperatur zu beheizen, bei welcher die Verschlussfolie 13 und der Produktträger 7 unter Druckeinwirkung durch das Siegelwerkzeug 19 miteinander verbindbar sind.

Das Oberwerkzeug 3 umfasst zudem Halteeinrichtungen 25. In den Figuren sind drei Halteeinrichtung 25 dargestellt, wobei jeweils ein Halteeinrichtung 25 einer zu verschließenden Verpackung zugeordnet ist. Die Halteeinrichtungen 25 umfassen jeweils eine umlaufende Haltekante 27, welche jeweils von der Siegelkante 21 umschlossen wird.

Die Siegeleinrichtung 1 umfasst eine Kühleinrichtung 29. Die Kühleinrichtung 29 umfasst in den Halteeinrichtungen 25 ausgebildete Kühlkanäle und ein Kühlaggregat zum Kühlen eines die Kühlkanäle durchfließenden Kühlmittels. Die Kühleinrichtung 29 ist dazu konfiguriert, die Halteeinrichtungen 25, insbesondere die Haltekanten 27, auf eine Halteeinrichtungs-Solltemperatur zu kühlen.

Figur 1 zeigt eine Ausgangssituation vor dem Siegeln, in der sowohl das Siegelwerkzeug 19 als auch die Halteeinrichtungen 25 in einer angehobenen Stellung vorliegen und nach oben von der Verschlussfolie 13 beabstandet sind.

Die Siegeleinrichtung 1 umfasst einen Halteantrieb 31, welcher dazu konfiguriert ist, die Halteeinrichtungen 25 relativ zu der Siegelauflage 17 abzusenken bzw. anzuheben. In der dargestellten Ausführungsform ist der Halteantrieb 31 als Membranaktuator dargestellt.

Aus der in Figur 1 dargestellten Ausgangssituation heraus senkt der Halteantrieb 31 die Halteeinrichtungen 25 ab, sodass die Haltekanten 27 in Kontakt mit der Verschlussfolie 13 kommen und die Verschlussfolie 13 sowie den Produktträger 7 zwischen der jeweiligen Halteeinrichtung 25 und der Siegelauflage 17 klemmen. Die Betriebssituation nach dem Absenken der Halteeinrichtungen 25 ist in Figur 2 dargestellt.

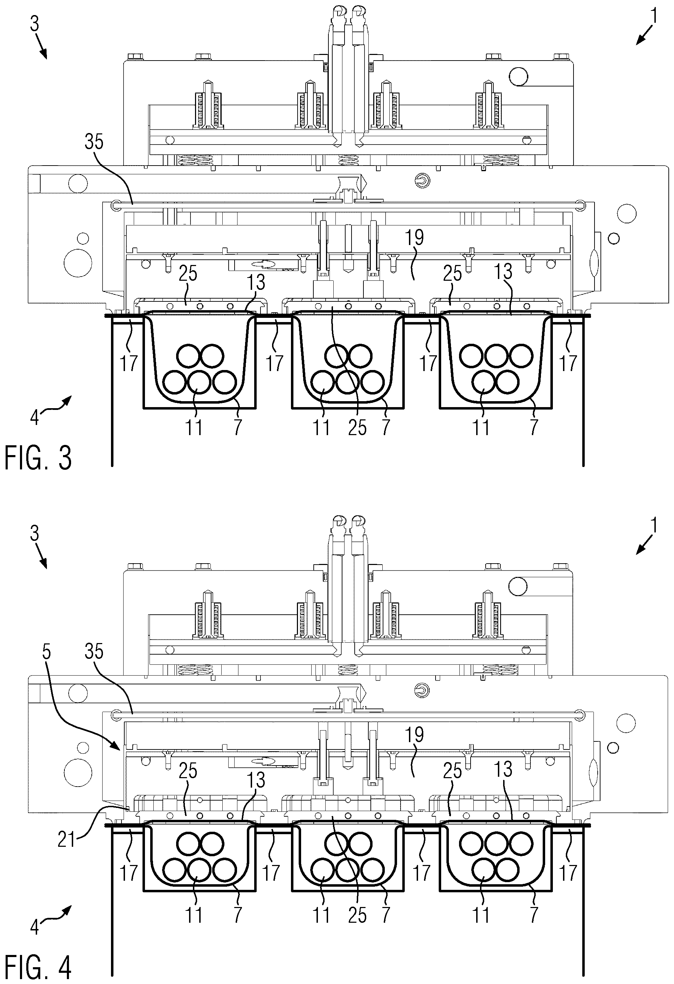

Aus der in Figur 2 dargestellten Betriebssituation heraus senkt ein Siegelantrieb 35 (siehe Figuren 3 und 4) bei bestehender Klemmung der Verschlussfolie 13 und des Produktträgers 7 das warme Siegelwerkzeug 19 in Richtung auf die Siegelauflage 17 ab. Durch das Absenken des Siegelwerkzeugs 19 kommt die Siegelkante 21 in Kontakt mit der Verschlussfolie 13 und wird von oben auf die Verschlussfolie 13 gedrückt. Unter Zusammenwirkung der Siegelkante 21 und der Siegelauflage 17 als Gegenlager wird die Verschlussfolie 13 entlang der Siegelnähte 15 an den Produktträger 7 gesiegelt. Dies erfolgt durch Wärme- und Druckeinwirkung von dem Siegelwerkzeug 19, insbesondere von der Siegelkante 21.

Der Siegelantrieb 35 ist in der dargestellten Ausführungsform ebenfalls als Membranantrieb ausgebildet.

Figur 5 zeigt eine Draufsicht auf die Verschlussfolie 13, wobei die Siegeleinrichtung 1 der Übersichtlichkeit halber nicht dargestellt ist. Die in Figur 5 mit dem Bezugszeichen 15 bezeichneten Linien stellen den Verlauf der Siegelnaht 15 dar. Die Linien 33 stellen Klemmpfade 33 dar, entlang welcher die Verschlussfolie 13 und der Produktträger 7 zwischen den Halteeinrichtungen 25 und der Siegelauflage 17 geklemmt werden. Die Klemmpfade 33 werden durch die Klemmkanten 27 definiert. In der dargestellten Ausführungsform sind die Klemmpfade 33, ebenso wie die Klemmkanten 27, durchgängig umlaufend. Es wäre aber auch denkbar, dass die Klemmpfade 33 und ebenso die Klemmkanten 27 jeweils mit Unterbrechungen umlaufen. Wie in Figur 5 dargestellt, liegen die Klemmpfade 33 jeweils innerhalb der entsprechenden Siegelnaht 15.

Nach dem Erstellen der Siegelnähte 15 wird das Siegelwerkzeug 19 durch den Siegelantrieb 35 wieder angehoben, wobei die Halteeinrichtungen 25 weiter in der abgesenkten Stellung verbleiben. Da die Verschlussfolie 13 und der Produktträger 7 weiter durch die Halteeinrichtungen 25 fixiert werden, wird ein zerstörungsfreies Lösen des Siegelwerkzeugs 19 von der Verschlussfolie 13 vereinfacht. Die Betriebssituation nach dem Anheben des Siegelwerkzeugs 19 nach dem Siegeln ist in Figur 4 dargestellt. Die Halteeinrichtung 25 können noch für eine Wartezeit in der abgesenkten Stellung belassen werden, bis die Siegelnaht 15 durch Abkühlen ausreichend stabil geworden ist.

## Patentansprüche

1. Siegeleinrichtung (1) für eine Verpackungsmaschine, umfassend:
eine Siegelauflage (17);
ein beheizbares Siegelwerkzeug (19);
eine Halteeinrichtung (25);
einen Halteantrieb (31), welcher dazu konfiguriert ist, die Halteeinrichtung (25) relativ zu der Siegelauflage (17) zu bewegen, so dass eine Verschlussfolie (13) und ein Produktträger (7) zwischen der Halteeinrichtung (25) und der Siegelauflage (17) geklemmt werden; und
einen Siegelantrieb (35), welcher dazu konfiguriert ist, das Siegelwerkzeug (19) relativ zu der Siegelauflage (17) zu bewegen und dadurch die Verschlussfolie (13) an den Produktträger (7) zu siegeln.

2. Siegeleinrichtung nach Anspruch 1, wobei der Halteantrieb (31) dazu konfiguriert ist, die Halteeinrichtung (25) relativ zu dem Siegelwerkzeug (19) zu bewegen.

3. Siegeleinrichtung nach Anspruch 1 oder 2, wobei der Siegelantrieb (35) dazu konfiguriert ist, das Siegelwerkzeug (19) relativ zu der Halteeinrichtung (25) zu bewegen.

4. Siegeleinrichtung nach einem der vorangehenden Ansprüche, wobei der Halteantrieb (31) dazu konfiguriert ist, die Halteeinrichtung (25) relativ zu der Siegelauflage (17) zu bewegen, während das Siegelwerkzeug (19) relativ zu der Siegelauflage (17) stationär bleibt.

5. Siegeleinrichtung nach einem der vorangehenden Ansprüche, wobei der Siegelantrieb (35) dazu konfiguriert ist, das Siegelwerkzeug (19) relativ zu der Siegelauflage (17) zu bewegen, während die Halteeinrichtung (25) relativ zu der Siegelauflage (17) stationär bleibt.

6. Siegeleinrichtung nach einem der vorangehenden Ansprüche, wobei der Halteantrieb (31) dazu konfiguriert ist, die Halteeinrichtung (25) auf die Siegelauflage (17) zuzubewegen, so dass die Verschlussfolie (13) und der Produktträger (7) zwischen der Halteeinrichtung (25) und der Siegelauflage (17) geklemmt werden, während das Siegelwerkzeug (19) von der Verschlussfolie (13) und dem Produktträger (7) beabstandet ist.

7. Siegeleinrichtung nach einem der vorangehenden Ansprüche, wobei der Siegelantrieb (35) dazu konfiguriert ist, das Siegelwerkzeug (19) auf die Siegelauflage (17) zuzubewegen und dadurch die Verschlussfolie (13) an den Produktträger (7) zu siegeln, während der Produktträger (7) und die Verschlussfolie (13) zwischen der Halteeinrichtung (25) und der Siegelauflage (17) geklemmt sind.

8. Siegeleinrichtung nach einem der vorangehenden Ansprüche, wobei der Halteantrieb (31) dazu konfiguriert ist, eine Klemmung der Verschlussfolie (13) und des Produktträgers (7) zwischen der Halteeinrichtung (25) und der Siegelauflage (17) erst zu lösen, nachdem das Siegelwerkzeug (19) durch den Siegelantrieb (35) zumindest so weit von der Siegelauflage (17) wegbewegt wurde, dass das Siegelwerkzeug (19) von der Verschlussfolie (13) und dem Produktträger (7) beabstandet ist.

9. Siegeleinrichtung nach einem der vorangehenden Ansprüche, wobei die Halteeinrichtung (25) zwischen dem Siegelwerkzeug (19) und der Siegelauflage (17) angeordnet ist.

10. Siegeleinrichtung nach einem der vorangehenden Ansprüche, wobei die Halteeinrichtung (25) eine umlaufende Haltekante (27) aufweist, welche dazu konfiguriert ist, den Produktträger (7) und die Verschlussfolie (13) um ein zwischen dem Produktträger (7) und der Verschlussfolie (13) liegendes Produkt (11) herum umlaufend zwischen der Halteeinrichtung (25) und der Siegelauflage (17) zu klemmen, wobei die Halteeinrichtung (25) vorzugsweise einen Abdeckungsbereich aufweist, welcher einen von der Haltekante (27) umlaufenen Bereich in Richtung auf das Siegelwerkzeug (19) hin vollständig abdeckt, wobei der Abdeckungsbereich insbesondere domförmig ausgebildet ist.

11. Siegeleinrichtung nach einem der vorangehenden Ansprüche, zudem umfassend: eine Kühleinrichtung (29), welche zu einem aktiven Kühlen der Halteeinrichtung (25) konfiguriert ist.

12. Verfahren zum Verschließen von Verpackungen, umfassend:
Klemmen eines Produktträgers (7) und einer Verschlussfolie (13) zwischen einer Halteeinrichtung (25) und einer Siegelauflage (17) um ein zwischen dem Produktträger (7) und der Verschlussfolie (13) liegendes Produkt (11) herum durch Absenken der Halteeinrichtung (25) mittels eines Halteantriebs (31);
bei bestehender Klemmung des Produktträgers (7) und der Verschlussfolie (13) zwischen der Halteeinrichtung (25) und der Siegelauflage (17) Absenken eines beheizten Siegelwerkzeugs (19) mittels eines Siegelantriebs (35), so dass die Verschlussfolie (13) entlang einer sich vollständig um das zwischen dem Produktträger (7) und der Verschlussfolie (13) liegende Produkt (11) herum erstreckenden Siegelnaht (15) an den Produktträger (7) gesiegelt wird; und
nach dem Siegeln bei immer noch bestehender Klemmung des Produktträgers (7) und der Verschlussfolie (13) zwischen der Halteeinrichtung (25) und der Siegelauflage (17) Anheben des Siegelwerkzeugs (19) durch den Siegelantrieb (35).

13. Verfahren nach Anspruch 12, zudem umfassend:
Evakuieren einer Siegelkammer (5), in welcher sich das Siegelwerkzeug (19), die Siegelauflage (17) und die Halteeinrichtung (25) befinden;
wobei das Evakuieren der Siegelkammer (5) bei bestehender Klemmung des Produktträgers (7) und der Verschlussfolie (13) zwischen der Halteeinrichtung (25) und der Siegelauflage (17) erfolgt.

14. Verfahren nach Anspruch 12 oder 13, wobei innerhalb der Siegelnaht (15) ein Kontakt zwischen der Verschlussfolie (13) und dem Siegelwerkzeug (19) durch einen Abdeckungsbereich der Halteeinrichtung (25) verhindert wird.

15. Verfahren nach einem der Ansprüche 12 bis 14, wobei die Halteeinrichtung (25) zumindest um 20 Grad Celsius, oder zumindest um 30 Grad Celsius, oder zumindest um 40 Grad Celsius, oder zumindest um 50 Grad Celsius, oder zumindest um 60 Grad Celsius kälter ist als das Siegelwerkzeug (19).
